# EUROPÄISCHE PATENTSCHRIFT

(11) **EP 3 224 058 B1**
(45) Veröffentlichungstag und Bekanntmachung des Hinweises auf die Patenterteilung: **10.10.2018**
(21) Anmeldenummer: 15747152.5
(22) Anmeldetag: 04.08.2015
(51) Int. Cl.: B60C 11/03, B60C 11/13, B60C 11/04

(54) **FAHRZEUGLUFTREIFEN**
VEHICLE TIRE
PNEUMATIQUE DE VÉHICULE

(30) Priorität: 24.11.2014 DE 102014223893
(43) Veröffentlichungstag der Anmeldung: 04.10.2017
(73) Patentinhaber: Continental Reifen Deutschland GmbH, 30165 Hannover (DE)
(72) Erfinder: RITTWEGER, Stefan, 30826 Garbsen (DE)
(74) Vertreter: Finger, Karsten
(86) Internationale Anmeldenummer: PCT/EP2015/067892
(87) Internationale Veröffentlichungsnummer: WO 2016/082943

(56) Entgegenhaltungen:
- EP-A1- 2 119 574
- DE-U1-202011 003 868
- SU-A1- 962 034

## Beschreibung

Die Erfindung betrifft einen Fahrzeugluftreifen in Radialbauart mit einem asymmetrischen Laufstreifen mit einer der Fahrzeugaußenseite zugeordneten Außenschulter und einer der Fahrzeuginnenseite zugeordneten Innenschulter und mit zumindest einer in Umfangsrichtung umlaufenden, beidseitig durch eine Umfangsrille begrenzten Profilrippe, welche eine erste, der Innenschulter näher befindliche Rippenflanke und eine zweite, der Außenschulter näher befindliche Rippenflanke aufweist, wobei jede Rippenflanke über einen im Querschnitt gerundeten Übergangsabschnitt mit dem Rillengrund der jeweiligen Umfangsrille verbunden ist, wobei sich die erste Rippenflanke in radialer Richtung aus einem ersten an den Übergangsabschnitt anschließenden Flankenabschnitt und einem zweiten zur Laufstreifenoberfläche verlaufenden Flankenabschnitt zusammensetzt, wobei beide Flankenabschnitte im Querschnitt im Wesentlichen geradlinig verlaufen und wobei der erste Flankenabschnitt unter einem Winkel von 10° bis 30° zur radialen Richtung verläuft.

Es ist bekannt, dass beim Fahren von Kurven die kurvenaußenseitig befindlichen Fahrzeugluftreifen durch die auftretende Zentrifugalkraft und die auftretenden Reibungskräfte besonders stark beansprucht werden. Diese Kräfte sind insbesondere von der jeweiligen Fahrgeschwindigkeit sowie dem Fahrzeuggewicht abhängig und können bei plötzlichen Ausweichmanövern erhebliche Auswirkungen auf das Fahrzeugverhalten, insbesondere auf die Spurstabilität, haben. In solchen Fahrsituationen ist es besonders wichtig, dass die Reifen gute Handlingeigenschaften aufweisen, zu welchen in diesem Zusammenhang insbesondere das Ansprechverhalten auf Lenkkräfte sowie die Übertragung von Seitenkräften auf die Fahrbahn gehören. Grundsätzlich sind die Handlingeigenschaften bei einem großflächigen Kontakt zwischen dem Laufstreifenprofil und der Fahrbahn besonders gut. Es ist jedoch erforderlich, in Laufstreifen Umfangsrillen vorzusehen, die ein gutes Wasserdrainagevermögen, welches insbesondere von den Querschnittsflächen der Umfangsrillen abhängig ist, gewährleisten. Es besteht daher ein Zielkonflikt zwischen den Handlingeigenschaften des Fahrzeugluftreifens und den Aquaplaningeigenschaften.

Ein Reifen der eingangs genannten Art ist beispielsweise aus der DE 20 2011 003 868 U1 bekannt. Der Laufstreifen dieses Reifens weist eine beidseitig durch eine Umfangsrille begrenzte Profilrippe auf, welche, im Querschnitt betrachtet, symmetrisch ausgeführt ist und von Rippenflanken begrenzt ist. Die Rippenflanken setzen sich, im Querschnitt und in radialer Richtung betrachtet, aus einem ersten Flankenabschnitt und einem zweiten, zur Laufstreifenoberfläche verlaufenden Flankenabschnitt zusammen, wobei der erste Flankenabschnitt zur radialen Richtung unter einem Winkel von 18° bis 22° und der zweite Flankenabschnitt zur radialen Richtung unter einem Winkel von 4° bis 7° verläuft.

Die DE 10 2009 003 565 A1 offenbart einen Fahrzeugluftreifen mit einem Laufstreifen mit zumindest einer in Umfangsrichtung umlaufenden Profilrippe, welche in axialer Richtung durch eine der Innenschulter näher befindlichen Rippenflanke und eine der Außenschulter näher befindlichen Rippenflanke begrenzt ist. Jede Rippenflanke weist einen radial inneren zum Rillengrund einer die Profilrippe in axialer Richtung begrenzenden Umfangsrille verlaufenden Abschnitt und einen radial äußeren zur Laufstreifenoberfläche verlaufenden Abschnitt auf. Der radial innere Abschnitt der der Innenschulter näher befindlichen Rippenflanke verläuft, im Querschnitt betrachtet, im Wesentlichen gerade und unter einem Winkel von bis zu 5° zur radialen Richtung. Der daran angrenzende radial äußere Abschnitt verläuft im Querschnitt ebenfalls im Wesentlichen gerade, jedoch unter einem größeren Winkel von insbesondere 30° bis 60° zur radialen Richtung. Die der Außenschulter näher befindliche Rippenflanke weist einen im Querschnitt im Wesentlichen gerade und unter einem Winkel von bis zu 5° zur radialen Richtung verlaufenden radial inneren Abschnitt und einen im Querschnitt entlang eines Kreisbogens gekrümmten, zur Rippenoberfläche verlaufenden zweiten Abschnitt auf.

Aus der DE 10 2010 040 647 A1 ist ein Fahrzeugluftreifen mit einem asymmetrisch profilierten Laufstreifen bekannt. Der Laufstreifen weist in seinem mittleren Bereich drei in Umfangsrichtung umlaufende Profilrippen auf, welche voneinander sowie zu schulterseitig angeordneten Profilpositiven durch je eine Umfangsrille getrennt sind. Die mittlere der drei Profilrippen und die dieser reifeinnenseitig benachbarte Profilrippe weisen Stollenrillen auf, welche von der die jeweilige Profilrippe reifeninnenseitig begrenzenden Umfangsrille ausgehen und innerhalb der Profilrippe auslaufen. Die reifenaußenseitige Profilrippe weist von beiden sie begrenzenden Umfangsrillen ausgehend derartige Stollenrillen auf. Fahrzeuge mit Fahrzeugluftreifen mit derart asymmetrisch profilierten Laufstreifen sollen eine verbesserte Lenkleistung aufweisen.

Die aus der JP H1029408 A und der JP H1029409 A bekannten Fahrzeugluftreifen weisen jeweils einen Laufstreifen mit drei Profilrippen auf, welche in axialer Richtung durch eine durchgehend gekrümmte Rippenflanke und eine im Wesentlichen gerade zur Rippenoberfläche verlaufende Rippenflanke begrenzt sind. In der einen Druckschrift befindet sich die gekrümmte Rippenflanke gegenüber der anderen näher bei der Reifenaußenschulter, in der anderen Druckschrift befindet sich die gekrümmte Rippenflanke näher bei der Reifeninnenschulter.

Die SU 962 034 A1 offenbart einen Fahrzeugluftreifen mit einem Laufstreifen mit Umfangsrillen, welche von Rillenflanken mit zur radialen Richtung unterschiedlich geneigten Flankenabschnitten begrenzt sind. Ferner ist aus der EP 2 119 574 A1 ein Fahrzeugluftreifen mit einem Laufstreifen mit einer von Umfangsrillen begrenzten Profilrippe bekannt, welche zu der einen Umfangsrille durch eine Rippenflanke begrenzt ist, die sich, im Querschnitt betrachtet, aus zwei zur radialen Richtung unterschiedlich geneigten Flankenabschnitten zusammensetzt.

Da moderne Personenkraftwagen im Zuge ihrer Weiterentwicklung im Allgemeinen größer, schwerer und stärker motorisiert werden, sind auch die vom Fahrzeug über die Reifen auf die Straße zu übertragenden Kräfte größer, sodass die Gefahr einer Untersteuerung bei Kurvenfahrten mit solchen Fahrzeugen erhöht ist. Frontangetriebene Fahrzeuge belasten die Reifen am stärksten, hier wirken neben Lenkkräften auch stark die Antriebskräfte.

Der Erfindung liegt daher die Aufgabe zu Grunde, bei einem Reifen der eingangs genannten Art die Profilrippen im Laufstreifen hinsichtlich Kraftübertragung zu verbessern.

Gelöst wird die gestellte Aufgabe erfindungsgemäß dadurch, dass die Rippenflanken im Querschnitt unterschiedlich geometrisch gestaltet sind und dass der zweite zur Laufstreifenoberfläche verlaufende Flankenabschnitt unter einem Winkel von bis zu 3° zur radialen Richtung verläuft.

Der erfindungsgemäße Verlauf der beiden Flankenabschnitte der der Innenschulter zugewandten Rippenflanke stabilisiert die Profilrippe beim Auftreten von Querkräften, etwa bei Kurvenfahrt. Der zweite, gegenüber der radialen Richtung nur gering geneigte Abschnitt trägt dazu bei, dass die Aquaplaningeigenschaften auch mit zunehmendem Abrieb konstant gut erhalten bleiben.

Gemäß einer vorteilhaften Ausführungsform der Erfindung beträgt der erste Winkel 15° bis 20°. Durch einen Winkel in diesem Bereich werden die bei Kurvenfahrt quer zur Umfangsrichtung wirkenden Kräfte besonders gut von der Profilrippe aufgenommen.

Bei einer weiteren bevorzugten Ausführungsform der Erfindung erstreckt sich der zweite Flankenabschnitt in radialer Richtung in eine Tiefe, welche 25 % bis 50 %, insbesondere 30 % bis 35 %, der Profiltiefe entspricht. Diese Ausführungsform ist für einen größeren Rillenquerschnitt der betreffenden Umfangsrille vorteilhaft, sodass gute Aquaplaningeigenschaften mit zunehmendem Abrieb des Reifens im Wesentlichen erhalten bleiben. Es werden daher sowohl die Steifigkeit der Profilrippe als auch das Wasseraufnahmevermögen der Umfangsrille optimiert.

Bei einer weiteren vorteilhaften Ausführungsform der Erfindung setzt sich die zweite Rippenflanke aus einem an den Übergangsabschnitt anschließenden im Querschnitt geradlinig unter einem Winkel von maximal 5° zur radialen Richtung verlaufenden ersten Flankenabschnitt und einem in die Rippenoberfläche übergehenden gerundeten zweiten Flankenabschnitt zusammen. Der steile, geradlinig verlaufende Flankenabschnitt ist für ein großes Rillenvolumen und die Aquaplaningeigenschaften günstig. Der gerundete Übergangsabschnitt verhindert ein Einrollen der jeweiligen Profilkante bei Seitenkräften.

Bei einer weiteren bevorzugten Ausführungsform sind die Profilrippen in ihrem der Außenschulter zugewandten Bereich über bis zu einem Drittel ihrer in axialer Richtung ermittelten Breite frei von Profilnegativen, wie Einschnitten oder Rillen, wodurch die Rippensteifigkeit weiter verbessert wird. In diesem Zusammenhang ist es ferner vorteilhaft, wenn etwaige Einschnitte, Rillen und dergleichen an der näher an der Innenschulter befindlichen Rippenflanke beginnend in die Profilrippe hinein verlaufen.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigt

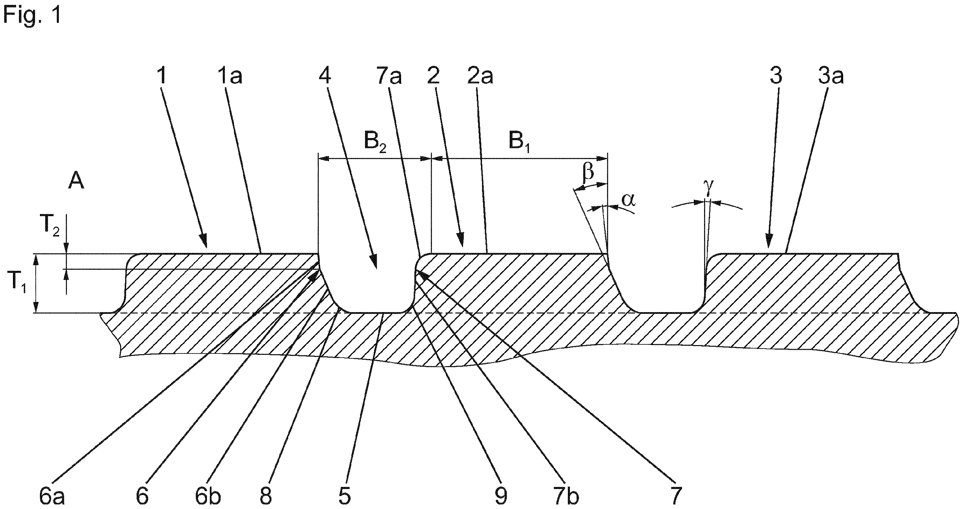

Fig. 1 einen Querschnitt durch einen Teilbereich eines Laufstreifens eines Fahrzeugluftreifens mit einer Ausführungsvariante der Erfindung.

Die Erfindung befasst sich mit speziell gestalteten Profilrippen in Laufstreifen von PKW- oder Van-Reifen in Radialbauart. Die erfindungsgemäßen Profilrippen sind, im Querschnitt betrachtet, asymmetrisch ausgeführt, sodass der Fahrzeugluftreifen, dessen Laufstreifen zumindest eine erfindungsgemäß ausgeführte Profilrippe aufweist, bezogen auf die Fahrzeuglängsachse eine definierte Außen- und eine definierte Innenschulter besitzt. Vorzugsweise ist zumindest je eine erfindungsgemäß ausgeführte Profilrippe in jeder Laufstreifenhälfte angeordnet. Im Rahmen der gegenständlichen Erfindung wird unter einer Profilrippe ein in Umfangsrichtung umlaufendes strukturiertes Profilpositiv, welches beispielsweise mit in axialer Richtung oder unter einem insbesondere spitzen Winkel zur axialen Richtung verlaufenden Querrillen, Einschnitten, Sacknuten und dergleichen versehen sein kann, verstanden. Die erwähnten Profilnegative münden insbesondere in eine die jeweilige Profilrippe reifeninnenseitig begrenzende Umfangsrille. In dem der Außenschulter zugewandten Bereich sind erfindungsgemäß gestaltete Profilrippen über bis zu einem Drittel ihrer Breite frei von Profilnegativen, wie Rillen oder Einschnitten.

In Fig. 1 ist die im montierten Zustand des Fahrzeugluftreifens der Fahrzeugaußenseite zugeordnete Schulter mit "A" und die der Fahrzeuginnenseite zugeordnete Schulter mit "I" bezeichnet.

Der Teilquerschnitt gemäß Fig. 1 durch den Laufstreifen zeigt beispielhaft drei Profilrippen 1, 2, 3, welche voneinander durch je eine Umfangsrille 4 getrennt sind. Bei der gezeigten Ausführung weisen sämtliche Profilrippen 1, 2, 3 eine übereinstimmende geometrische Gestalt auf und sind erfindungsgemäß ausgeführt. Weitere an die Profilrippen 1, 2, 3 in axialer Richtung anschließende schulterseitige Profilpositive sind vorzugsweise in bekannter Weise gestaltet.

In der gezeigten Ausführungsvariante können die Profilrippen 1, 2, 3 derart am Laufstreifen angeordnet sein, dass sich die Profilrippe 2 entlang der Umfangsmitte des Laufstreifens erstreckt. Die Profilrippe 1 verläuft näher zur Reifenaußenschulter A und die Profilrippe 3 näher zur Reifeninnenschulter I. Jede Profilrippe 1, 2, 3 ist in radialer Richtung durch eine zur Laufstreifenoberfläche gehörende Rippenoberfläche 1a, 2a, 3a begrenzt, an welcher jede Profilrippe 1, 2, 3 eine in axialer Richtung ermittelte Breite B₁ von beispielsweise 30 mm bis 40 mm aufweist.

Jede Umfangsrille 4 weist eine über ihre Erstreckung im Wesentlichen gleichbleibende Querschnittsfläche auf und besitzt eine an der Laufstreifenoberfläche in axialer Richtung ermittelte Breite B₂ von beispielsweise 8,0 mm bis 11,0 mm. An ihren tiefsten Stellen besitzen die Umfangsrillen 4 eine in radialer Richtung ermittelte Tiefe T₁ von vorzugsweise 6,0 mm bis 8,5 mm, wobei diese Tiefe T₁ der für den jeweiligen Reifen vorgesehenen maximalen Profiltiefe entspricht.

Jede Umfangsrille 4 ist durch einen im Wesentlichen parallel zur Laufstreifenoberfläche verlaufenden Rillengrund 5, zwei einander gegenüberliegende Rippenflanken 6, 7 und zwei gerundete Übergangsabschnitte 8, 9, welche den Rillengrund 5 mit den Rippenflanken 6, 7 verbinden, begrenzt. Dementsprechend ist jede Profilrippe 1, 2, 3 durch ihre Rippenoberfläche 1a, 2a, 3a sowie die an diese anschließenden Rippenflanken 6, 7 und die Übergangsabschnitte 8, 9 begrenzt. Jede Profilrippe 1, 2, 3 weist somit eine der Reifeninnenschulter I näher befindliche Rippenflanke 6 und eine der Reifenaußenschulter A näher befindliche Rippenflanke 7 auf.

Die der Reifeninnenschulter I näher befindliche Rippenflanke 6 setzt sich aus einem radial äußeren Flankenabschnitt 6a und einem radial inneren Flankenabschnitt 6b zusammen. Beide Flankenabschnitte 6a, 6b verlaufen im Querschnitt im Wesentlichen gerade. Der radial äußere Flankenabschnitt 6a verläuft unter einem Winkel α von bis zu 3° zur radialen Richtung und endet in einer in radialer Richtung ermittelten Tiefe T₂, welche 25% bis 50%, insbesondere 30% bis 35%, der Tiefe T₁ entspricht. Der radial innere Flankenabschnitt 6b verläuft unter einem Winkel β > α zur radialen Richtung, wobei der Winkel β 10° bis 30°, insbesondere 15° bis 20°, beträgt.

Die der Reifenaußenschulter A näher befindliche Rippenflanke 7 weist ebenfalls einen radial äußeren Flankenabschnitt 7a und einen radial inneren Flankenabschnitt 7b auf. Der radial innere Flankenabschnitt 7b verläuft im Querschnitt im Wesentlichen gerade und unter einem Winkel γ von maximal 5° zur radialen Richtung. Der radial äußere Flankenabschnitt 7a ist lediglich ein mit einem kleinen Radius von 1 mm bis 3 mm gerundeter Übergangsabschnitt des radial inneren Flankenabschnittes 7b zu einer der Rippenoberflächen 1a, 2a, 3a.

Bei einer weiteren, jedoch nicht gezeigten erfindungsgemäßen Ausführungsform kann der radial äußere Flankenabschnitt 7a in Form einer Schrägfläche, einer Fase, ausgeführt sein, welche vorzugsweise unter einem Winkel von 35° bis 55° zur radialen Richtung verläuft.

### Bezugsziffernliste

- 1: Profilrippe
- 1a: Rippenoberfläche
- 2: Profilrippe
- 2a: Rippenoberfläche
- 3: Profilrippe
- 3a: Rippenoberfläche
- 4: Umfangsrille
- 5: Rillengrund
- 6: Rillenflanke
- 6a: radial äußerer Flankenabschnitt
- 6b: radial innerer Flankenabschnitt
- 7: Rillenflanke
- 7a: radial äußerer Flankenabschnitt
- 7b: radial innerer Flankenabschnitt
- 8: Übergangsabschnitt
- 9: Übergangsabschnitt
- B₁, B₂: Breite
- T₁, T₂: Tiefe
- α, β, γ: Winkel

## Patentansprüche

1. Fahrzeugluftreifen in Radialbauart mit einem asymmetrischen Laufstreifen mit einer der Fahrzeugaußenseite zugeordneten Außenschulter und einer der Fahrzeuginnenseite zugeordneten Innenschulter und mit zumindest einer in Umfangsrichtung umlaufenden, beidseitig durch eine Umfangsrille (4) begrenzten Profilrippe (1, 2, 3), welche eine erste, der Innenschulter näher befindliche Rippenflanke (6) und eine zweite, der Außenschulter näher befindliche Rippenflanke (7) aufweist, wobei jede Rippenflanke (6, 7) über einen im Querschnitt gerundeten Übergangsabschnitt (8, 9) mit dem Rillengrund (5) der jeweiligen Umfangsrille (4) verbunden ist, wobei sich die erste Rippenflanke (6) in radialer Richtung aus einem ersten an den Übergangsabschnitt (8) anschließenden Flankenabschnitt (6b) und einem zweiten zur Laufstreifenoberfläche verlaufenden Flankenabschnitt (6a) zusammensetzt, wobei beide Flankenabschnitte (6a, 6b) im Querschnitt im Wesentlichen geradlinig verlaufen und wobei der erste Flankenabschnitt (6b) unter einem Winkel (β) von 10° bis 30° zur radialen Richtung verläuft,
**dadurch gekennzeichnet,**
**dass** die Rippenflanken (6, 7) im Querschnitt unterschiedlich geometrisch gestaltet sind und dass der zweite zur Laufstreifenoberfläche verlaufende Flankenabschnitt (6a) unter einem Winkel (α) von bis zu 3° zur radialen Richtung verläuft.

2. Fahrzeugluftreifen nach Anspruch 1, **dadurch gekennzeichnet, dass** der Winkel (β), unter dem der erste Flankenabschnitt (6b) zur radialen Richtung verläuft, 15° bis 20° beträgt.

3. Fahrzeugluftreifen nach Anspruch 1 oder 2, **dadurch gekennzeichnet, dass** sich der zweite Flankenabschnitt (6a) in radialer Richtung bis in eine Tiefe (T₂) erstreckt, welche 25% bis 50% der Profiltiefe (T₁) entspricht.

4. Fahrzeugluftreifen nach Anspruch 3, **dadurch gekennzeichnet, dass** die Tiefe (T₂) 30% bis 35% der Profiltiefe (T₁) entspricht.

5. Fahrzeugluftreifen nach einem der Ansprüche 1 bis 4, **dadurch gekennzeichnet, dass** sich die zweite Rippenflanke (7) aus einem an den Übergangsabschnitt (9) anschließenden im Querschnitt geradlinig unter einem Winkel (γ) von maximal 5° zur radialen Richtung verlaufenden ersten Flankenabschnitt (7b) und einem in die Rippenoberfläche übergehenden gerundeten zweiten Flankenabschnitt (7a) zusammensetzt.

6. Fahrzeugluftreifen nach einem der Ansprüche 1 bis 5, **dadurch gekennzeichnet, dass** die Profilrippe (1, 2, 3) in ihrem der Außenschulter (A) zugewandten Bereich über bis zu einem Drittel ihrer in axialer Richtung ermittelten Breite (B₁) frei von Profilnegativen, wie Rillen oder Einschnitten, ist.

7. Fahrzeugluftreifen nach einem der Ansprüche 1 bis 6, **dadurch gekennzeichnet, dass** etwaige Einschnitte, Rillen und dergleichen an der näher an der Innenschulter (I) befindlichen Rippenflanke (6) beginnend in die Profilrippe (1, 2, 3) hinein verlaufen.

## Claims

1. Pneumatic vehicle tyre of radial type of construction, having an asymmetrical tread with an outer shoulder, which is assigned to the outside of the vehicle, and an inner shoulder, which is assigned to the inside of the vehicle, and having at least one profile rib (1, 2, 3) which is of encircling form in a circumferential direction and which is delimited on both sides by a circumferential channel (4) and which has a first rib flank (6), situated relatively close to the inner shoulder, and a second rib flank (7), situated relatively close to the outer shoulder, wherein each rib flank (6, 7) is connected, via a transition section (8, 9) of rounded cross section, to the channel base (5) of the respective circumferential channel (4), wherein the first rib flank (6) is, in a radial direction, composed of a first flank section (6b), which adjoins the transition section (8), and of a second flank section (6a), which runs to the tread surface, wherein the two flank sections (6a, 6b) run substantially rectilinearly in cross section, and wherein the first flank section (6b) runs at an angle (β) of 10° to 30° with respect to the radial direction,
**characterized in that** the rib flanks (6, 7) are of different geometrical design in cross section, and **in that** the second flank section (6a), which runs to the tread surface, runs at an angle (α) of up to 3° with respect to the radial direction.

2. Pneumatic vehicle tyre according to Claim 1, **characterized in that** the angle (β) at which the first flank section (6b) runs with respect to the radial direction amounts to 15° to 20°.

3. Pneumatic vehicle tyre according to Claim 1 or 2, **characterized in that** the second flank section (6a) extends in a radial direction to a depth (T₂) which corresponds to 25% to 50% of the profile depth (T₁).

4. Pneumatic vehicle tyre according to Claim 3, **characterized in that** the depth (T₂) corresponds to 30% to 35% of the profile depth (T₁).

5. Pneumatic vehicle tyre according to one of Claims 1 to 4, **characterized in that** the second rib flank (7) is composed of a first flank section (7b), which adjoins the transition section (9) and which, in cross section, runs rectilinearly at an angle (γ) of at most 5° with respect to the radial direction, and a rounded second flank section (7a), which transitions into the rib surface.

6. Pneumatic vehicle tyre according to one of Claims 1 to 5, **characterized in that** the profile rib (1, 2, 3) is, in its region facing toward the outer shoulder (A), over up to one third of its width (B₁) determined in an axial direction, free from profile negatives such as channels or sipes.

7. Pneumatic vehicle tyre according to one of Claims 1 to 6, **characterized in that** any sipes, channels and the like run into the profile rib (1, 2, 3) starting at the rib flank (6) situated relatively close to the inner shoulder (I).

## Revendications

1. Pneumatique de véhicule de construction radiale, comprenant une bande de roulement asymétrique avec un épaulement extérieur associé au côté extérieur du véhicule et un épaulement intérieur associé au côté intérieur du véhicule, et au moins une nervure profilée (1, 2, 3) s'étendant sur la périphérie dans la direction périphérique, limitée des deux côtés par une rainure périphérique (4), qui présente un premier flanc de nervure (6) se trouvant plus près de l'épaulement intérieur et un deuxième flanc de nervure (7) se trouvant plus près de l'épaulement extérieur, chaque flanc de nervure (6, 7) étant connecté au fond de rainure (5) de la rainure périphérique respective (4) par le biais d'une portion de transition (8, 9) de section transversale arrondie, le premier flanc de nervure (6) dans la direction radiale se composant d'une première portion de flanc (6b) se raccordant à la portion de transition (8) et d'une deuxième portion de flanc (6a) s'étendant vers la surface de la bande de roulement, les deux portions de flanc (6a, 6b) s'étendant essentiellement en ligne droite en section transversale, et la première portion de flanc (6b) s'étendant suivant un angle (β) de 10° à 30° par rapport à la direction radiale,
**caractérisé en ce que**
les flancs de nervure (6, 7) sont configurés avec une géométrie différente en section transversale, et **en ce que** la deuxième portion de flanc (6a) s'étendant vers la surface de la bande de roulement s'étend suivant un angle (α) de jusqu'à 3° par rapport à la direction radiale.

2. Pneumatique de véhicule selon la revendication 1, **caractérisé en ce que** l'angle (β) suivant lequel s'étend la première portion de flanc (6b) par rapport à la direction radiale vaut 15° à 20°.

3. Pneumatique de véhicule selon la revendication 1 ou 2, **caractérisé en ce que** la deuxième portion de flanc (6a) s'étendant dans la direction radiale jusqu'à une profondeur (T₂) qui correspond à 25% à 50% de la profondeur du profilé (T₁).

4. Pneumatique de véhicule selon la revendication 3, **caractérisé en ce que** la profondeur (T₂) correspond à 30% à 35% de la profondeur du profilé (T₁).

5. Pneumatique de véhicule selon l'une quelconque des revendications 1 à 4, **caractérisé en ce que** le deuxième flanc de nervure (7) se compose d'une première portion de flanc (7b) se raccordant à la portion de transition (9), de section transversale rectiligne et s'étendant suivant un angle (γ) de 5° maximum par rapport à la direction radiale, et d'une deuxième portion de flanc (7a) arrondie se prolongeant par la surface de nervure.

6. Pneumatique de véhicule selon l'une quelconque des revendications 1 à 5, **caractérisé en ce que** la nervure profilée (1, 2, 3), dans sa région tournée vers l'épaulement extérieur (A) sur jusqu'à un tiers de sa largeur (B₁) mesurée dans la direction axiale, est exempte de parties profilées négatives, telles que des rainures ou des entailles.

7. Pneumatique de véhicule selon l'une quelconque des revendications 1 à 6, **caractérisé en ce que** des entailles, rainures et similaires éventuelles s'étendent au niveau du flanc de nervure (6) se trouvant le plus près de l'épaulement intérieur (I) en commençant dans la nervure profilée (1, 2, 3) .
